# EUROPÄISCHE PATENTSCHRIFT

(11) **EP 0 367 275 B1**
(45) Veröffentlichungstag und Bekanntmachung des Hinweises auf die Patenterteilung: **19.02.1997**
(21) Anmeldenummer: 89120335.8
(22) Anmeldetag: 02.11.1989
(51) Int. Cl.: B29C 44/34, B61D 17/04, B65D 90/02

(54) **Verfahren zum Herstellen eines Isoliercontainers**
Method for producing an insulating container
Procédé de fabrication d'un conteneur isolant

(30) Priorität: 03.11.1988 DE 3837264
(43) Veröffentlichungstag der Anmeldung: 09.05.1990
(73) Patentinhaber: GRAAFF Gesellschaft mit beschränkter Haftung, D-31008 Elze (DE)
(72) Erfinder: Dörpmund, Willi, D-3210 Elze 1 (DE)
(74) Vertreter: Walter, Helmut, Dipl.-Ing.

(56) Entgegenhaltungen:
- EP-A- 0 249 299
- DD-A- 83 587
- DD-A- 248 776
- DD-A- 252 160
- GB-A- 2 092 054

## Beschreibung

Die Erfindung bezieht sich auf eine Eckverbindung zwischen der Bodenplatte und einer Seitenwandplatte von Kühlcontainern und auf ein Verfahren zur Herstellung einer erfindungsgemäßen Eckverbindung.

Bei einem Isoliercontainer, wie er bei der Erfindung vorausgesetzt ist, handelt es sich insbesondere um einen Großcontainer genormter Abmessungen, der aufgrund dieser Abmessungen die Form eines liegenden Quaders hat und aufgrund der genormten Abmessungen mit anderen, entsprechenden Containern in einer Ebene z. B. auf dem Deck eines Schiffes zusammengestellt und/oder gestapelt werden kann.

Solche Container, die zum Transport verderblicher Waren bestimmt sind, werden im allgemeinen doppelwandig ausgeführt, wobei zwischen Deckplatten eine Isolierschicht eingeschäumt ist, die neben der Isolierfunktion die Aufgabe hat, die Deckplatten zu versteifen, so daß eine starre Sandwichkonstruktion geringen Gewichtes vorliegt.

Bei der Fertigung werden Seitenwände, Dach und Boden des Containers separat gefertigt, indem je zwei Deckplatten durch Randprofile in einem vorgegebenen Abstand voneinander gehalten werden, diese hohle Doppelwandplatte in eine Schaumform eingegeben wird und in die bis auf Entgasungsöffnungen fluiddichte Hohlplatte die Schaumkomponenten eingebracht werden, um aufzuschäumen und am Ende des Schäumprozesses den Hohlraum zwischen Deckplatten und Randprofilen vollständig und homogen auszufüllen. Nach dem Erstarren des Schaumes zu einem starren, mit den Deckplatten und den Randprofilen verbundenen Schaumkörper liegt eine gut isolierende, gut zu handhabende und starre Platte vor.

Die Randprofile dieser einzelnen Platten sind so ausgebildet, daß Seitenwand-, Boden- und Deckplatten zu einem Container zusammengefügt werden können, wobei insbesondere zumindest eine Stirnwand als zu öffnende und zu schließende, im allgemeinen zweiteilige Türeinheit ausgebildet ist.

Bei einer bekannten Lösung nach DD - A - 83587 endet die Schaumstoffstützschicht sowohl der Bodenplatte als auch jeder der Seitenwandplatte stirnseitig an dem jeweiligen Randprofil, das Bestandteil der jeweiligen Platte vor und nach dem Ausschäumen der Platte ist. Jedes Randprofil hat im Querschnitt ]-Form, wobei am Steg die Stützschaumschicht anliegt und die freien Flanschenden nach außen weisen. Zwischen den freien Enden von Bodenplatte und Seitenwandplatte wird nunmehr ein Kastenträger angeordnet und mit den freien Flanschenden verschweißt, so daß drei Teilkammern entstehen, nämlich zwei äußere Teilkammern zwischen einem Flanschpaar je eines Randprofiles und einer Wand des Kastenträgers. Die Teilkammern bleiben gegen die Schaumstoffstützschichten von Boden- und Seitenwandplatte abgesperrt, während alle drei Teilkammern über Schlitze in den Kastenträgerwänden miteinander in Verbindung stehen. Das Resultat ist, daß die mit Luft gefüllten Teilkammern die Schweißhitze beim Zusammenschweißen der Deckplatten von Boden- und Seitenwandplatte mit dem Kastenträger von den Kunststoffstützkörpern von Boden- und Seitenwandplatte fernhalten und daß nach dem Zusammenschweißen die drei Teilkammern nachträglich mit Kunststoff ausgeschäumt werden, um auch im Bereich der Eckverbindung zwischen Boden- und Seitenwandplatte Wärmebrücken zwischen dem Containerinnenraum und der Containerumgebung nur wenig entstehen zu lassen. Dies wird aber tatsächlich nur in relativ geringem Umfang erreicht, weil sich die Schlitze in Wänden des Kastenträgers nur über eine begrenzte Länge des Kastenträgers erstrecken können und die nicht durch Schlitze unterbrochenen Abschnitte der Kastenträgerwände wie die Randprofile von Seitenwand- und Bodenplatte Wärme- bzw. Kältebrücken zwischen den inneren und den äußeren Deckplatten von Seitenwand- und Bodenplatte bilden. Auch kann es aus Festigkeitsgründen als nur wenig befriedigend angesehen werden, daß im Bereich der Verbindung von Seitenwand- und Bodenplatte drei voneinander getrennte Schaumstoffstützkörper vorliegen; die beiden Kunststoffstützkörper von Bodenplatte und Seitenwandplatte und der separate Kunststoffstützkörper im und seitlich von Kastenträger. Die Konstruktion ist schließlich durch den geschlossenen Kastenträger aufwendig und schwer.

Die vorliegende Erfindung befaßt sich mit einer Eckverbindung, mit der aufgabegemäß bei einer gattungsgemäßen Eckverbindung der Boden und eine Seitenwand an der gemeinsamen Kante so zusammengefügt werden können, daß in diesem Bereich keine Temperaturbrücken entstehen, eine gute Steifigkeit gewährleistet ist und die schließlich mit geringem Aufwand unter weitgehender Verwendung der Methode hergestellt werden kann, die auch für die Fertigung der Platten selbst angewendet wird, die als Boden und Seitenwand zur Anwendung kommen.

Der Lösung der Aufgabe dienen die Merkmale der Patentansprüche und die dadurch gekennzeichnete Erfindung wird nachfolgend anhand zweier in der Zeichnung dargestellter Ausführungsbeispiele beschrieben. In der Zeichnung zeigen:
- Fig. 1: den Bereich der unteren Kante zwischen Boden und einer Seitenwand eines Isoliercontainers im Querschnitt, wobei zur Herstellung der Verbindung zwischen Boden und Seitenwand das erfindungsgemäße Verfahren in einer ersten Ausführungsform zur Anwendung kommt,
- Fig. 2: in einer entsprechenden Darstellung eine entsprechende Kantenverbindung, wobei jedoch das erfindungsgemäße Verfahren in einer zweiten Ausführungsform zur Anwendung kommt,
- Fig. 3: in einer wiederum entsprechenden Darstellung den erwähnten Kantenbereich mit einem Teil der Vorrichtung, die für das erfindungsgemäße Verfahren in seinen beiden Ausführungsformen zur Anwendung kommt,
- Fig. 4,5,6: unterschiedliche Ausgestaltungen eines Randprofiles, wie es im besonderen im Zusammenhang mit dem erfindungsgemäßen Verfahren, darüber hinaus aber auch allgemein als besonders steifes Randprofil für die Bodenplatte eines Eisenbahnwagens Verwendung finden kann, insbesondere zum winkelsteifen Anschluß einer Seitenwand an eine Bodenplatte.

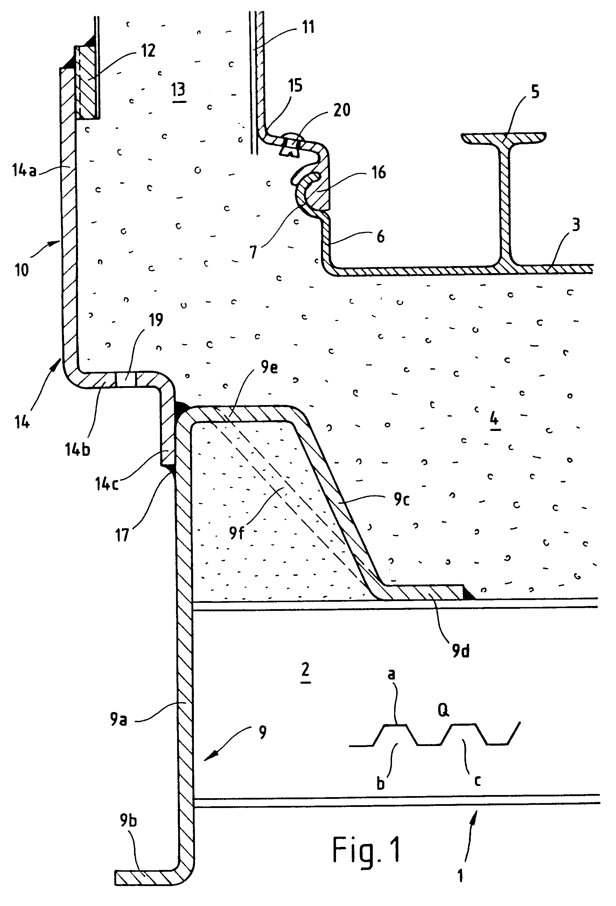

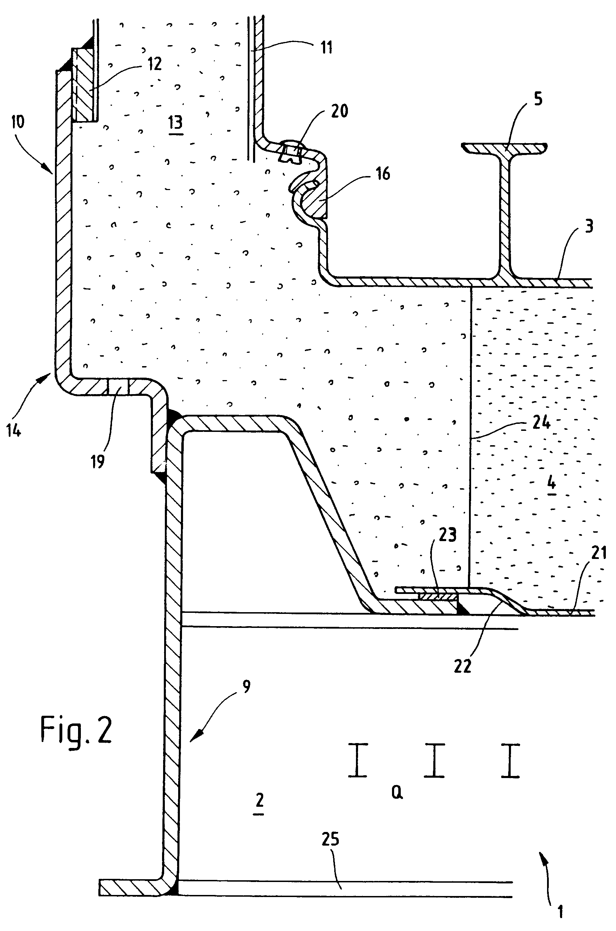

Die beiden Ausführungsformen der Erfindung tragen dem Umstand Rechnung, daß es die hier vorausgesetzten Container in zwei Varianten gibt. Bei der ersten Variante ist die untere der beiden Deckplatten des Containerbodens derart als Wellplatte ausgebildet, daß eine Vielzahl von Wellen in Bodenquerrichtung verlaufen und in Bodenlängsrichtung aufeinanderfolgen, wobei jede Welle im Querschnitt trapezförmig ist mit der breiteren Trapezseite unten und der schmaleren Trapezseite oben, wobei diese Breitenverhältnisse in den Rinnen zwischen zwei aufeinanderfolgenden Wellen selbstredend umgekehrt sind (Fig. 1). Diese Bodenplatte hat eine sehr große Biegesteifigkeit aus sich selbst heraus, zusätzliche Versteifungen sind an sich entbehrlich. Bei der anderen Variante ist die untere Deckplatte des Bodens glatt und die damit gegenüber der anderen Variante geringere Steifigkeit wird dadurch kompensiert, daß der Container mit der Bodenunterseite auf Querträger aufgesetzt und mit diesen verbunden wird (Fig. 2). Die in Bodenlängsrichtung aufeinanderfolgenden Querträger sind vorzugsweise parallel zueinander verlaufende I-Profile.

Bei beiden Varianten ist die obere Deckplatte im allgemeinen mit Längsprofilen 5 versehen, um das Ladegut in einem gewissen Abstand über dem eigentlichen Boden anzuordnen und eine Luftzirkulation zwischen Ladegut und eigentlichem Containerboden zu ermöglichen.

Die Erfindung wird zunächst anhand der ersten Variante mit gewellter unterer Deckplatte des Containerbodens erläutert (Fig. 1). Dabei, wie auch bei der anderen Variante und wie allgemein üblich, findet als Material der Deckplatten sowohl beim Boden als auch bei der Seitenwand Bleche Verwendung. Die zur Bildung des Starrschaumes einzubringenden Komponenten sind für die Erfindung ohne Belang und allgemein bekannt, wobei als Bedingung hier lediglich von Interesse ist, daß sowohl in der Seitenwand als auch im Boden als auch im erfindungsgemäß zu behandelnden Übergangsbereich zwischen Dach und Seitenwand gleiche Schaumkomponenten Anwendung finden, um einen durchgehend gleichen Schaumkörper zu haben. Generell gesprochen handelt es sich dabei um einen Polyurethanschaum.

Der Boden 1 besteht nun aus der unteren Deckplatte 2, der oberen Deckplatte 3 und dem zwischen beiden angeordneten Starrschaumkörper 4. Die untere Deckplatte ist ein Trapezwellblech, dessen Querschnitt Q verkleinert in die Darstellung der unteren Deckplatte 2 eingezeichnet ist (Fig. 1). Die Wellen der unteren Deckplatte verlaufen in Bodenquerrichtung und folgen in Bodenlängsrichtung aufeinander. Der Querschnitt jeder Welle ist trapezförmig mit der kleineren Seite a oben und der größeren Seite b unten, in den Wellentälern c selbstredend umgekehrt.

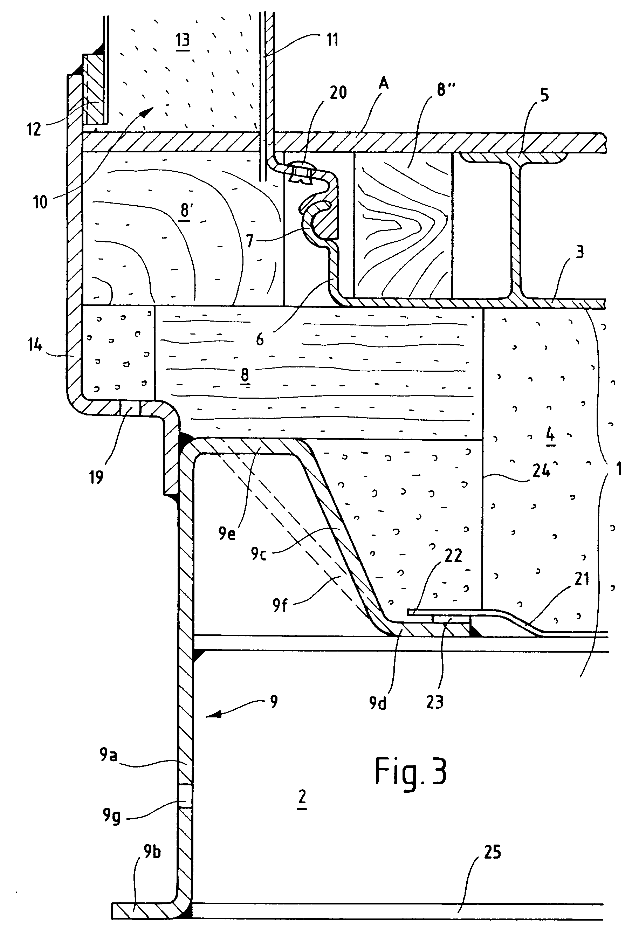

Am Längsrand ist die obere Deckplatte 3, die auf der Oberseite die parallel in Bodenlängsrichtung verlaufende T-Profile 5 aufweist, mit einem nach oben gerichteten Flansch 6 versehen, dessen Endkante eine offene Rinne 7 bildet. Das Ausschäumen des Bodens zwischen seinen Deckplatten erfolgt nach Einlegen der Deckplatten 2 und 3 in eine Form, die ein Ausbeulen der Deckplatten unter dem Schaumdruck verhindert und deren Wand, an der die obere Deckplatte 3 anliegt, generell mit A bezeichnet ist. Vorzugsweise erfolgt das Ausschäumen des Bodens am Ort des Zusammenbaus mit der Seitenwand und in der zusammenbaugerechten Position. Im Gegensatz zum Stand der Technik wird jedoch der auszuschäumende Hohlraum zwischen den Deckplatten zumindest an dem der Seitenwand zugekehrten Ende nicht durch ein dauerhaft eingebautes Randprofil verschlossen, mit dem der Schaum wie mit den Deckplatten eine Verbindung eingeht und das dem Anschluß des Bodens an der Seitenwand dient. Es wird vielmehr ausschließlich für den Schaumprozeß zwischen den Deckplatten ein Formbalken 8 als zeitweiliger Verschluß eingelegt (Fig. 3), der sich über zwei Stützbalken 8', 8'' von der Höhe der Profile 5 an der der oberen Deckplatte 3 zugehörigen Wand der Schäumform A abstützt. Mit seiner Unterseite liegt der Formbalken 8 auf einem Bodenlangträger, Bodenrandprofil bzw. Hutprofil 9 auf. Formbalken und Profil 9 verhindern einen Austritt des sich im Aufschäumen der Bodenplatte ausbildenden Schaumes an dem der Seitenwand zugekehrten Ende des Bodens und zwischen oberer und unterer Deckplatte. Dieser Formbalken 8 ist also nicht Teil des Bodens sondern Teil der mehrteiligen Schäumvorrichtung A. Nach dem Erstarren des Schaumes zu dem mit den Deckplatten 2 und 3 verbundenen Starrschaumkörpers 4 wird der Formbalken 8 ausgebaut, die Stirnseite des Schaumkörpers 4 liegt frei zwischen den Deckplatten. Entsprechendes gilt für die Beilagen (Stützbalken) 8', 8''.

Das Bodenrandprofil 9 ist lediglich mit der unteren Deckplatte 2 verbunden und an diese angeschweißt worden, ehe der Boden ausgeschäumt wurde (Bildung des Schaumkörpers 4). Dieses Randprofil ist ein unsymmetrisches strangförmiges Hutprofil, dessen einer, vertikal verlaufender Schenkel 9a mit einem unteren horizontalen Endflansch 9b zumindest etwa in der unteren Bodenebene liegt, oben deutlich über die Oberseite der unteren Deckplatte 2 hinausgeführt ist und dessen anderer Schenkel 9c, den Profilquerschnitt nach unten erweiternd, schräg nach dem Bodeninneren verläuft. Dieser Schenkel 9c endet vorzugsweise in einem horizontalen Endflansch 9d, der mit den oberen Wellenflächen a der unteren Deckplatte 2 verschweißt ist. Bis zur Oberseite 9e des Hutprofiles 9 mit ungleich langen Schenkeln ist die Bodenplatte zur Seite hin dauerhaft verschlossen und der Verschluß im darüberliegenden Bereich während des Schäumvorganges erfolgt durch den schon erwähnten Formbalken 8 und in diesem Bereich ist der Schaumkörper nach dem Ausbau des Formbalkens frei zugänglich, wobei dieser Teil der Stirnseite des Schaumkörpers gegenüber dem darunterliegenden Teil und den Deckplatten etwas zurückversetzt ist, etwa bis an das freie Ende des Flansches 9d, um beim noch zu beschreibenden Verbinden mit der Seitenwand eine gute Schaumanbindung zu erhalten, wie sie erfindungswesentlich ist.

Zur Einbringung der Schaumkomponenten in den Bereich zwischen oberer und unterer Deckplatte bei der Herstellung zunächst der Bodenplatte weist der Langträger 9 in dem Steg 9a in den Bereichen der Wellentäler der Bodenplatte 1 Einlaßöffnungen 9g auf, wobei für eine angemessene Entlüftung während des Schäumvorganges zu sorgen ist. Der besseren Abstützung des Formbalkens 8 an der Schäumform A bei der Herstellung der Bodenplatte dienen die bereits erwähnten Beilagen 8' und 8'', wobei auf die Beilage 8'' gegebenenfalls verzichtet werden kann.

Unabhängig von der beschriebenen Fertigung des Bodens 1 erfolgt in entsprechender Weise die Fertigung der Seitenwand 10. Sie besteht zunächst aus der inneren Deckplatte 11 sowie der dieser gegenüber beabstandeten äußeren Deckplatte 12. Beide Deckplatten 11 und 12 werden in eine stützende Schäumform eingelegt und in der für den Boden beschriebenen, allgemein üblichen Weise ausgeschäumt, wiederum aber mit dem Unterschied, daß zumindest an dem dem Boden 1 zugekehrten Rand der Verschluß des ursprünglichen Hohlraumes nicht durch ein fest eingebautes Randprofil, sondern durch einen Formbalken erfolgt, der wie der Formbalken 8 nach dem Erhärten des Schaumkörpers 13 entfernt wird.

An der äußeren Deckplatte 12 und zwar an deren unterem Rand ist ein im wesentlichen winkelförmiges Randprofil 14 angesetzt, dessen längerer, vertikaler Schenkel 14a mit der äußeren Deckplatte 12 der Seitenwand verbunden ist und dessen anderer, kürzerer Schenkel 14b von außen her auf den Schenkel 9a gerichtet ist (Einbauzustand), ohne den Bereich zwischen den Deckplatten 11 und 12 zu verschließen. Am freien Ende weist der Schenkel 14b einen nach unten gerichteten Flansch 14c auf, der dem Anschluß der äußeren Deckplatte 12 der Seitenwand 10 an der Bodenplatte nach der Herstellung von Bodenplatte und Seitenwand in der beschriebenen Weise dient.

Dem Anschluß der inneren Deckplatte 11 am Boden dient ein horizontal abgewinkelter Flansch 15, der am Ende eine Feder 16 aufweist, die zum Zusammenbau von Seitenwand 10 und Boden 1 in die Nut 7 eingeführt wird. Zur zusätzlichen Sicherung ist die Feder 16 geschlitzt, um den Rand der Nut 7 zu umgreifen. Der Starrschaumstützkörper 13 der Seitenwand endet etwa zwischen den Rändern der Deckplatten 11 und 12, über die die Randprofile 14 und 15 als Teile der Seitenwand hinausragen, wobei beide Randprofile als ursprünglich separate Randprofile an die Deckplatten angesetzt sind.

Nachdem Seitenwand 10 und Boden 1 in der beschriebenen Weise als seitlich offene Sandwichplatten (Deckplatten mit stützendem Starrschaumkörper) hergestellt sind, werden sie nach Ausbau des Formbalkens 8 und der Beilagen 8', 8'' zusammengebaut, indem die Federleiste 16 in die Nutleiste 7 eingesetzt wird, der Endflansch 14c spiellos an dem Schenkel 9a anliegt und Endflansch 14c und Schenkel 9a miteinander verschweißt werden (Schweißnaht 17). Nunmehr wird der verbliebene Hohlraum zwischen der Stirnseite des Schaumstoffstützkörpers 13 und der Teilstirnfläche des Schaumstoffstützkörpers 4, den der Formbalken 8 und die Beilage 18' bei der Herstellung der Bodenplatte sowie die entsprechenden Teile bei der Herstellung der Seitenwand eingenommen haben, ausgeschäumt. Die Schaumstoffkomponenten können über Einlaßöffnungen 19 im horizontalen Abschnitt 14b des Profiles 14 eingebracht werden, die auf die Länge des Profiles 14 verteilt sind, während die Entlüftung über Öffnungen 20 erfolgt, die auf die Länge des Flansches 15 der Deckplatte 11 bzw. eines entsprechenden Randprofiles verteilt sind.
Auf diese Weise sind Boden und Seitenwand in rationeller Weise unabhängig voneinander zu fertigen, am Ende der Herstellung des Containers liegt aber eine in Seitenwand und Boden einstückige Stützschicht vor, weil der Schaum im ursprünglichen Hohlraum zwischen dem Stützkörper der Seitenwand und dem des Bodens mit diesen Stützkörpern eine innige Verbindung eingeht.

Wie bei der nachfolgend zu beschreibenden Ausführungsform gemäß Fig. 2 kann bei der Ausführungsform gemäß Fig. 1 das Hutprofil 9 im oberen Teil eine abweichende Form haben, indem beispielsweise der schräg verlaufende Schenkel 9c in einem Übergangsbogen an den vertikalen Schenkel 9a anschließt und ohne Endflansch 9d an die Oberseite der Wellplatte 2 anschließt, wie es in Fig. 1 durch den unterbrochenen Linienzug 9f angedeutet ist.

Die Anordnung gemäß Fig. 2 unterscheidet sich von der Anordnung nach Fig. 1 insoweit, als der Boden 1 eine untere bzw. äußere ebene Deckplatte 21 aufweist, wo bei der Anordnung nach Fig. 1 die Wellplatte 2 vorgesehen ist. Diese untere Deckplatte 21 endet in einem Abdichtungsflansch 22, der über den dabei notwendigen horizontalen Flansch 9d des Endprofiles 9 hinweggeführt ist und sich auf diesem über einen Dichtstreifen 23 abstützt. Flansch 9d, Abdichtungsflansch 22 und Dichtstreifen 23 verlaufen über die gesamte Länge des Containers bzw. Bodens 1, so daß der Bereich zwischen den Deckplatten 3, 21 im unteren Teil bis zum schrägen Flansch 9c des Endprofiles 9, im oberen Teil, bedingt durch den während des Schäumvorganges eingesetzten Formbalken 8, bis etwa in die Ebene 24 vom Stützschaumkörper 4 ausgefüllt ist. Auch hierbei weist die Bodenplatte kein eigenes Endprofil auf, sie ist im Bereich der Fläche 24 durch den Formbalken nur während des Ausschäumens verschlossen und nach der Verbindung mit der in der vorbeschriebenen Weise hergestellten Seitenwand offen, so daß wie in der vorbeschriebenen Weise der nach dem Zusammenbau von Bodenplatte und Seitenwand verbleibende Hohlraum ausgeschäumt werden kann, Einfüll- und Belüftungsöffnugnen sind nicht dargestellt bis auf die Einfüllöffnungen 19 und die Entlüftungsöffnungen 20 für das Ausschäumen des Übergangshohlraumes. Der verbliebene Hohlraum im Übergangsbereich vom Boden 1 zur Seitenwand 10 wird, wie im Zusammenhang mit Fig. 1 beschrieben, abschließend ausgeschäumt.

Dann wird die Baugruppe auf die Querträger 25 aufgesetzt, die I-Querschnitt haben und wie sie als Querschnitte Q in den Steg des Querträgers 25 eingezeichnet sind. Die Querträger 25 werden an ihren Enden mit dem vertikalen Flansch 9a des Endprofiles 9 verschweißt. Beim Ausschäumen des Hohlraumes im Übergangsbereich zwischen Boden 1 und Seitenwand 10 wird wieder gemäß Fig. 3 ein Füllstück 8'' Anwendung finden und es sind hierfür Einfüllöffnungen 19 zur Einbringung der Schaumkomponenten im Randprofil 14 und Entlüftungsöffnungen 20 im Randprofil 15 vorgesehen.

Bei der im Zusammenhang mit dem erfindungsgemäßen Verfahren gemäß Fig. 1 bis 3 verwendeten Endprofil 9 ist der steife Kopf dadurch gebildet, daß der vertikale Stegabschnitt 9a am unteren Ende zumindest etwa mit der Unterseite der Bodenplatte 1 abschließt und dort einen nach außen gerichteten Flansch 9b aufweist, während der Stegabschnitt 9a mit seinem oberen Ende deutlich über die Oberseite der unteren Deckplatte 2 der Bodenplatte 1 hinaus verlängert ist und sich am oberen Ende im horizontalen Abschnitt 9e fortsetzt und dann wieder schräg nach unten zur Oberseite der unteren Deckplatte 2 der Bodenplatte 1 verläuft (Abschnitt 9c), um schließlich gegebenenfalls in dem horizontalen Abschnitt 9d zu enden (ausgezogener Linienzug 9c, 9d), der auf der Oberseite der unteren Deckplatte der Bodenplatte aufliegt und mit dieser verbunden ist, wobei jedoch auch der letzte, horizontale Abschnitt 9d entfallen kann, wenn das untere Ende des Stegabschnittes 9c mit der Oberseite der unteren Deckplatte 2 der Bodenplatte 1 verbunden ist (unterbrochener Linienzug 9f). Ersichtlich liegt mit dem an der Bodenplatte angesetzten Profil 9 ein besonders biegesteifes Endprofil vor, an dessen in sich steifen Kopf oberhalb der unteren Deckplatte 2 der Bodenplatte 1 mittels des Randprofils 14 die Seitenwand 10 anschließbar ist. Die Lösung ist insoweit unabhängig von der Ausgestaltung der Bodenplatte und der Seitenwand ein besonders günstiges, weil steifes, Anschlußelement für die Seitenwand an die Bodenplatte, eine besonders steife Verbindung zwischen Bodenplatte und Seitenwand.

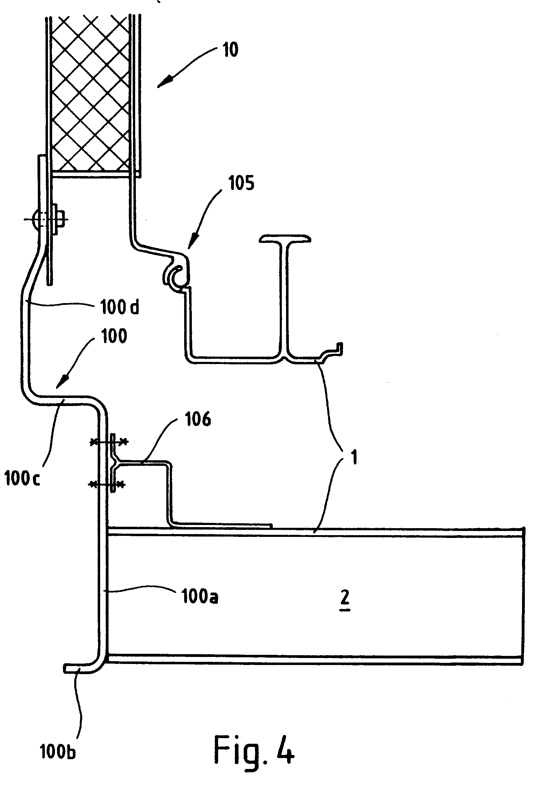

Abwandlungen dieser Ausgestaltung des Endprofiles sind in Fig. 4 bis 6 dargestellt, wobei, wie erwähnt, das in Rede stehende Profil, bisher mit dem Bezugszeichen 9, das Bezugszeichen 100 trägt.

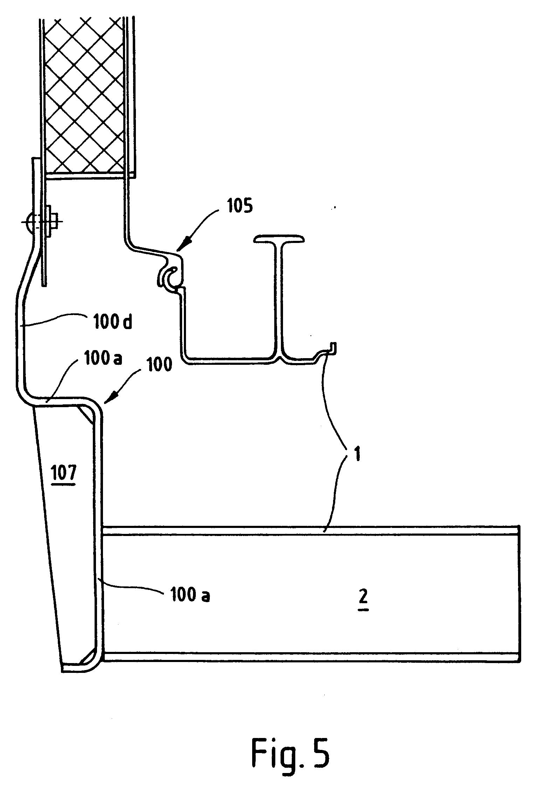

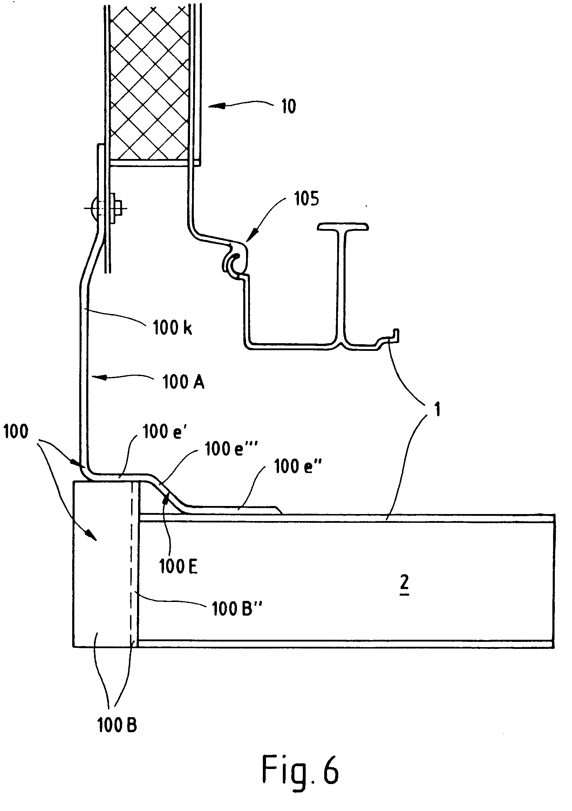

In den Figuren 5 und 6 sind in Ergänzung der Ausführungsformen des Endprofils bzw. Bodenlangträgers 9 gemäß Fig. 1 bis 3 verschiedene Ausgestaltungen dieses End- bzw. Hutprofiles bzw. Bodenlangträgers 9 dargestellt, wie sie in besonders zweckmäßiger Weise im Zusammenhang mit dem erfindungsgemäßen Verfahren Anwendung finden können, darüber hinaus aber auch ganz allgemein als Bodenlangträger bzw. Endprofil zur seitlichen Begrenzung der Bodenplatte eines Eisenbahnwagens, weshalb in den Figuren 4 bis 6 dieses Bauteil in seiner Gesamtheit das Bezugszeichen 100 trägt. Fig. 4 ist eine weniger zweckmäßige Vergleichslösung. Auch wird in diesem Zusammenhang nur die Platte 2 als Bodenplatte angesprochen, weil es auf die Bodenplatte 1 in der Form gemäß Fig. 1 bis 3 mit oberer Deckplatte 3, unterer Deckplatte 2 und Stützkörper 4 nicht ankommt, obwohl diese Ausgestaltung auch bei Fig. 4 bis 6 vorgesehen ist, um den Vorteil der Entlastung der Verbindung 105 zeigen zu können.

Wesentlich ist, daß das Endprofil einen biegesteifen Kopf bildet, der einen optimalen, d.h. sehr biegesteifen Anschluß der Seitenwand 10 an die Bodenplatte ermöglicht, außer der im Zusammenhang mit dem erfindungsgemäßen Verfahren guten Auflage für einen Formbalken 8 beim Schäumvorgang.

Bei der Lösung nach Fig. 4 weist das Endprofil den vertikalen Stegabschnitt 100a auf, der unten in der Ebene der Unterseite der Platte 2 endet und den nach außen gerichteten Flansch 100b trägt, während er oben deutlich über die Oberseite der Platte 2 hinausragt, nach außen und oben abgewinkelt ist (Abschnitte 100c, 100d) und im oberen Bereich an die Seitenwand 10 angeschlossen ist. Diese Lösung gibt nur ein gutes Ergebnis, in Verbindung mit einer weiteren Abstützung 105 der Seitenwand 10 auf ihrer Innenseite sowie einer weiteren Winkelschiene 106, die z.B. unter Zwischenlage eines Klebestreifens mit dem vertikalen Steg 100a in dessen oberem Bereich verbunden ist.

Bei der Lösung nach Fig. 5 ist die Verbindung 105 entlastet und die Winkelschiene 106 entfällt, indem das Profil 100 im Winkel zwischen vertikalem Stegabschnitt 100a und dem horizontalen Stegabschnitt 100c durch Bleche 107 ausgesteift ist, die auf die Länge des Endprofils 100 verteilt, diesem fest zugeordnet sind, indem sie mit den Stegabschnitten 100a und 10°C verschweißt sind.

Bei der Lösung nach Fig. 6 ist die Ausgestaltung des Endprofils der Ausgestaltung gemäß Fig. 2 angenähert, indem das zweiteilige Profil 100 aus dem Winkelteilprofil 100A und dem platten- oder leistförmigen Teilprofil 100B besteht. Das winkelförmige Teilprofil 100A hat den vertikalen Stegteil 100k zum Anschluß an der Seitenwand 10 und den im wesentlichen horizontalen Stegteil 100E zum Anschluß an der Oberseite der Platte 2, der seinerseits nochmals in sich versteift ist, indem zwei höhenversetzte horizontale Abschnitte 100e' und 100e'' durch einen schräg verlaufenden Abschnitt 100e''' miteinander verbunden sind. An dem horizontalen Stegteil 100E ist zwischen seinen Enden im Bereich des äußeren horizontalen Abschnittes 100e' das vertikale Teilprofil 100B angesetzt, das ein Längsblech und mit der Stirnseite der unteren Deckplatte der Bodenplatte verbunden ist. Auch hier ist die weitere Abstützung 105 deutlich wegen der Steifigkeit des Endprofils 100 entlastet, wie es bei dem Endprofil 9 gemäß Fig. 1 bis 3 sowie dem Endprofil 100 der Fig. 5 der Fall ist, bei der Lösung gemäß Fig. 4 jedoch nur in Verbindung mit dem Profil 106, das an dieser Stelle häufig störend ist. Die Lösung gemäß Fig. 6 ist wie die Lösung nach Fig. 1 bis 3 zweiteilig. Bei der Lösung nach Fig. 1 bis 3 ist das Teilprofil 14 Teil der Seitenwand, das Teilprofil 9 Teil der Bodenplatte. Bei der Lösung nach Fig. 6 sind sowohl das Teilprofil 100A als auch das Teilprofil 100B zunächst der Bodenplatte zugeordnet, obwohl auch andere Zuordnungen möglich sind, so daß diese Art der Aufteilung eine gute Ecksteifigkeit aber auch größere Flexibilität verspricht.

Wenn im Zusammenhang mit dem Ausschäumen auf Einlaßöffnungen für die Schaumkomponenten und Entlüftungsöffnungen hingewiesen wurde, so handelt es sich um Teile bekannter Techniken, die in ebenfalls bekannter Weise abgewandelt werden können. Hierzu gehört es beispielsweise, nur eine Reihe aufeinanderfolgender Öffnungen im Bereich des oberen oder unteren Randes des auszuschäumenden Hohlraumes vorzusehen und die Öffnungen einer solchen Reihe in der Reihe fortschreitend als Einlaßöffnungen und als Entlüftungsöffnungen zu benutzen.

## Patentansprüche

1. Eckverbindung zwischen der Bodenplatte (1) und einer Seitenwandplatte (10) von Kühlcontainern, wobei sowohl die Bodenplatte (1) als auch die Seitenwandplatte (10) eine Sandwichplatte aus zwei Deckplatten (2,3 bzw. 11, 12) ist, die mit einer zwischen ihnen befindlichen Starrschaumschicht verbunden sind, **dadurch gekennzeichnet**, daß sowohl bei der Seitenwandplatte (10) als auch bei der Bodenplatte (1) die Deckplatten (2,3 bzw. 11,12) über die Starrschaumschicht hinausragen und unter Belassung eines von den Starrschaumschichten freien Raumes die inneren Deckplatten (3,11) miteinander und die äußeren Deckplatten (2,12) fest miteinander verbunden sind und zwar die inneren Deckplatten (3,11) über nut- und federartig im Eingriff stehende Profile (7,16), die äußeren Deckplatten (2,12) über ein Randprofil (9,14), das sowohl mit der äußeren Deckplatte (12) der Seitenwandplatte (10) als auch mit der äußeren Deckplatte (2) der Bodenplatte (1) fest verbunden ist.

2. Eckverbindung nach Anspruch 1, **dadurch gekennzeichnet,** daß sich der zur Bodenplatte (1) gehörende Teil der nut- und federartigen Verbindung (7,16) an einen Flansch (6) der oberen Deckplatte (3) der Bodenplatte (1) angesetzt ist, der von der oberen Deckplatte aus nach oben gerichtet ist.

3. Eckverbindung nach Anspruch 1 oder 2, **dadurch gekennzeichnet,** daß zwischen den äußeren Deckplatten (2,12) von Bodenplatte (1) und Seitenwandplatte (10) sich das aus zwei Teilen (9,14) bestehende Randprofil befindet, von dessen beiden Teilen eines (9) mit Querträgern bzw. einer Wellplatte der Bodenplatte, das andere (14) mit der äußeren Deckplatte (12) der Seitenwandplatte (10) verbunden ist und die sich mit parallelen Profilteilen (9a, 14c) überdecken, um an den Enden der Überdeckung miteinander verschweißt (Schweißnaht 17) zu sein.

4. Eckverbindung nach Anspruch 3, **dadurch gekennzeichnet,** daß das Randprofilteil (14) der Seitenwandplatte (10) im wesentlichen ein Winkelprofil mit am einen Schenkel (14b) angesetzten Flansch (14c) zur Verbindung mit dem anderen Randprofilteil (9) ist.

5. Eckverbindung nach Anspruch 3 oder 4, **dadurch gekennzeichnet,** daß das Randprofilteil (9) der Bodenplatte (1) ein Hutprofil mit ungleich langen vertikalen Schenkeln (9a, 9c) ist, wobei der längere Schenkel (9a) etwa am unteren Ende der Bodenplatte (1) endet und um die Länge des anderen Schenkels (9c) in den Bereich zwischen den Bodendeckplatten (2,3) hineinragt, der seinerseits mit einem abgebogenen Flansch (9d) auf den Oberseiten von Querträgern bzw. eines Wellbleches der Bodenplatte (1) aufliegt, wobei beide Schenkel an ihren äußeren Enden mit den Querträgern bzw. dem Wellblech verschweißt sind.

6. Eckverbindung nach Anspruch 5, **dadurch gekennzeichnet**, daß der kürzere Schenkel (9c) schräg zum längeren Schenkel (9a) verläuft, so daß der Abstand zwischen den oberen, durch den Profilsteg (9e) miteinander verbundenen Schenkelenden kleiner ist als der Abstand zwischen dem mit der Oberseite der Querträger bzw. des Wellbleches verbundenen Ende des kürzeren Schenkels und dem längeren Schenkel.

7. Eckverbindung nach Anspruch 5, **dadurch gekennzeichnet,** daß die untere Deckplatte (2) der Bodenplatte (1) auf dem abgebogenen Flansch (9d) des kürzeren Schenkels (9c) des Hutprofils (9) über einen Abdichtungsflansch und einen Dichtungsstreifen abgestützt ist, wobei einzelne Querträger den Boden tragen.

8. Eckverbindung nach einem der Ansprüche 1 - 7, **gekennzeichnet durch** einen ersten, vertikal vor der Längsseite der Bodenplatte (1) liegenden Stegabschnitt (100a, 100b) des Randprofils (9,14), der an der Bodenplatte derart befestigt ist, daß er unten mit der Bodenplatte bzw. deren seitlicher Unterkante zumindest etwa abschließt, mit seinem oberen Ende deutlich über die Außenplatte (2) der Bodenplatte reicht und am oberen Ende in einen zweiten, horizontalen Stegabschnitt (100c, 100E) übergeht, um an dem dem erstgenannten vertikalen Stegabschnitt abgekehrten Ende in einen dritten wiederum vertikalen Stegabschnitt der Seitenwandplatte überzugehen, der an der Außenplatte befestigt ist, wobei die Länge des zweiten Stegabschnittes zumindest etwa der Breite der Seitenwandplatte entspricht.

9. Eckverbindung nach Anspruch 8, **dadurch gekennzeichnet,** daß das Randprofil ein einteiliges biegefestes Strangguß- oder Abkantprofil ist, bei dem der dritte, vertikale Stegabschnitt deutlich über die seitliche Oberkante der Bodenplatte hinausragt.

10. Eckverbindung nach Anspruch 8, **dadurch gekennzeichnet**, daß das Randprofil ein zweiteiliges Profil ist mit einem ersten winkelförmigen, an der Seitenwandplatte befestigten Strangguß- oder Abkantprofil (100A) und mit einem zweiten, leistenförmigen oder plattenförmigen Teilprofil (100B), das an der Bodenplatte (1) befestigt ist, wobei das erste Teilprofil (100A) einen vertikalen, an der Seitenwandplatte (10) befestigten Stegabschnitt (100K) und einen horizontalen, an der Bodenplatte (1) befestigten und mit dem zweiten Teilprofil (100B) verbundenen Stegabschnitt (100E) einschließt.

11. Eckverbindung nach Anspruch 10, **dadurch gekennzeichnet**, daß der zweite, horizontale Stegabschnitt (100E) des ersten Teilprofils (100A) und das obere Ende des zweiten Teilprofils im Bereich der seitlichen Oberkante der äußeren Deckplatte (2) der Bodenplatte (1) zusammenstoßen und dort miteinander verbunden sind.

12. Eckverbindung nach Anspruch 9, **dadurch gekennzeichnet**, daß der Winkel zwischen erstem, vertikalen Stegabschnitt (100a) und zweiten, horizontalem Stegabschnitt (100E) durch mehrere Blechstützen (107) ausgesteift ist, die auf die Länge des Endprofils verteilt und mit erstem und zweitem Stegabschnitt verbunden sind.

13. Eckverbindung nach Anspruch 9 oder 12, **dadurch gekennzeichnet**, daß der erste, vertikale Stegabschnitt (100a) an seinem unteren Ende abgekantet ist derart, daß das abgekantete Ende in der horizontalen Ebene der seitlichen Unterkante der äußeren Deckplatte (2) der Bodenplatte (1) von dieser weg gerichtet verläuft.

14. Eckverbindung nach einem der Ansprüche 9 bis 13, **gekennzeichnet dadurch**, daß bei Zuordnung des Randprofils zu einer wellenförmigen Bodenplatte, deren Wellen In Längsrichtung der Bodenplatte aufeinanderfolgen.

15. Verfahren zum Herstellen einer Eckverbindung nach zumindest einem der Ansprüche 1 bis 14 unter Verwendung einer Bodenplatte (1) und einer Seitenwandplatte (10), wobei jede Platte eine innere und eine äußere Deckplatte 3, 11 bzw. 2, 12 aufweist und sich zwischen den Deckplatten (2, 3 bzw. 11, 12) von Boden- bzw. Seitenwandplatte (1 bzw. 10) eine Stützschicht aus Starrschaum befindet derart, daß die Deckplatten in Richtung auf die Eckverbindung über die jeweilige Starrschaumstützschicht hinausragen, dadurch gekennzeichnet, daß zunächst die Leiste (16) in die zugehörige Nut (7) der Leisten- und Nut-Verbindung (7,16; 105) das Randprofil (9,10; 100) zwischen Seitenwand- und Bodenplatte (1, 10) angeordnet und mit deren äußeren Deckplatten (2, 12) verbunden wird, und daß danach Komponenten des Starrschaums durch Öffnungen (20) im Bereich der Leisten- und Nut-Verbindung (7,16; 105) zum Aufschäumen gebracht werden, sodaß sie eine Verbindung mit den Starrschaumstützschichten (4,13) und den Deckplatten (2,3; 11,12) eingehen und der dabei entstehende Schaumkörper erstarrt.

## Claims

1. A corner connection between the bottom panel (1) and a side wall panel (10) of refrigerated containers, wherein both the bottom panel (1) and the side wall panel (2) are sandwich panels consisting of two outer panels (2, 3; 11, 12) connected to a rigid foam layer between them, characterised in that the outer panels (2, 3; 11, 12) project beyond the rigid foam layer both at the side wall panel (10) and at the bottom panel (1) and the inside outer layers (3, 11) are interconnected and the outside outer layers (2, 12) are rigidly interconnected, a space being left free of the rigid foam layers, the inside outer panels (3, 11) being interconnected via profiles (7, 16) engaging tongue-and-groove fashion while the outside outer panels (2, 12) are rigidly interconnected via an edge profile (9, 14) which is rigidly connected both to the outside outer panel (12) of the side wall panel (10) and to the outside outer panel (2) of the bottom panel (1).

2. A corner connection according to claim 1, characterised in that the part of the tongue-and-groove type connection (7, 16) belonging to the bottom panel (1) is attached to a flange (6) of the top outer panel (3) of the bottom panel (1), which flange extends upwardly from the top outer panel.

3. A corner connection according to claim 1 or 2, characterised in that the edge profile consisting of two parts (9, 14) is situated between the outside outer panels (2, 12) of the bottom panel (1) and the side wall panel (10), one of the said two parts (9) being connected to cross-members or a corrugated panel of the bottom panel while the other (14) is connected to the outside outer panel (12) of the side wall panel (10) and the said parts overlap with parallel profile parts (9a, 14c) for welding together (weld seam 17) at the ends of the overlap.

4. A corner connection according to claim 3, characterised in that the edge profile part (14) of the side wall panel (10) is substantially an angle profile with a flange (14c) attached to one arm (14b) for connection to the other edge profile part (9).

5. A corner connection according to claim 3 or 4, characterised in that the edge profile part (9) of the bottom panel (1) is a cap profile with unequally long vertical arms (9a, 9c), the longer arm (9a) terminating substantially at the bottom end of the bottom panel (1) and projecting, by the length of the other arm (9c), into the zone between the bottom outer panels (2, 3), which other arm (9c) bears, by a bent-off flange (9d), on the top sides of cross-members or a corrugated sheet of the bottom panel (1), both arms being welded at their outer ends to the cross-members or corrugated sheet.

6. A corner connection according to claim 5, characterised in that the shorter arm (9c) extends at an angle to the longer arm (9a) so that the distance between the top arm ends interconnected by the profile web (9e) is less than the distance between the longer arm and the end of the shorter arm connected to the top of the cross-member or corrugated sheet.

7. A corner connection according to claim 5, characterised in that the bottom outer panel (2) of the bottom panel (1) is supported on the bent-off flange (9d) of the shorter arm (9c) of the cap profile (9) via a sealing flange and a sealing strip, individual cross-members carrying the bottom.

8. A corner connection according to any one of claims 1 to 7, characterised by a first web portion (100a, 100b) of the edge profile (9, 14), which edge portion is situated vertically in front of the longitudinal side of the bottom panel (1) and is so secured to the latter that at the bottom it is at least substantially flush with the bottom panel or its lateral bottom edge, while its top end distinctly extends beyond the outside panel (2) of the bottom panel and merges at the top end into a second horizontal web portion (100c, 100E), and merges, at the end remote from the first-mentioned vertical web portion, into a third again vertical web portion of the side wall panel fixed to the outside panel, the length of the second web portion corresponding at least approximately to the width of the side wall panel.

9. A corner connection according to claim 8, characterised in that the edge profile is a one-piece flexurally rigid extruded or pressed profile, wherein the third vertical web portion distinctly projects beyond the lateral top edge of the bottom panel.

10. A corner connection according to claim 8, characterised in that the edge profile is a two-part profile having a first angular extruded or pressed profile (100A) fixed on the side wall panel and having a second partial profile (100B) in the form of a strip or panel fixed to the bottom panel (1), the first partial profile (100A) enclosing a vertical web portion (100K) fixed on the side wall panel (10) and a horizontal web portion (100E) fixed on the bottom panel (1) and connected to the second partial profile (100B).

11. A corner connection according to claim 10, characterised in that the second horizontal web portion (100E) of the first partial profile (100A) and the top end of the second partial profile abut in the region of the lateral top edge of the outside outer panel (2) of the bottom panel (1) and are interconnected there.

12. A corner connection according to claim 9, characterised in that the angle between the first vertical web portion (100a) and the second horizontal web portion (100E) is reinforced by a number of sheet-metal supports (107) distributed over the length of the end profile and connected to the first and second web portions.

13. A corner connection according to claim 9 or 12, characterised in that the first vertical web portion (100a) is bent at its bottom end in such manner that the bent-off end extends in the horizontal plane of the lateral bottom edge of the outside outer panel (2) of the bottom panel (1) in a direction away from the latter.

14. A corner connection according to any one of claims 9 to 13, characterised by the association of the edge profile with a corrugated bottom panel, the corrugations of which follow one another in the longitudinal direction of the bottom panel.

15. A method of making a corner connection according to at least one of claims 1 to 14, using a bottom panel (1) and a side wall panel (10), each panel comprising an inside outer panel and an outside outer panel (13, 11; 2, 12) and a supporting layer of rigid foam being provided between the outer panels (2, 3; 11, 12) of the bottom and side wall panels (1; 10) in such manner that the outer panels project beyond the associated rigid foam support layer in the direction of the corner connection, characterised in that the strip (16) is first disposed into the associated groove (7) of the strip and groove connection (7, 16; 105), the edge profile (9, 10; 100) between the side wall and bottom panels (1, 10) and is connected to their outside outer panels (2, 12) and in that then components of the rigid foam are introduced through openings (20) in the region of the strip and groove connection (7, 16; 105) for foaming so as to form a connection with the rigid foam support layers (4, 13) and the outer panels (2, 3; 11, 12) and the resulting foam body solidifies.

## Revendications

1. Assemblage angulaire entre le plancher (1) et une paroi latérale (10) d'un conteneur frigorifique, aussi bien le plancher (1) que la paroi latérale (10) étant des éléments sandwich formés par deux panneaux (2,3 ou 11,12) avec interposition d'une couche de mousse durcissante, **assemblage caractérisé par le fait** que les panneaux (11,12 et 2,3) aussi bien de la paroi latérale (10) que du plancher (1) dépassent la couche de mousse durcissante et que les panneaux intérieurs (3,11) sont assemblés entre eux par des profils genre rainure et languette (7,16), et les panneaux extérieurs (2,12), par un profil d'extérieur (9,14), tout en laissant un espace non rempli de mousse durcissante, profil solidarisé aussi bien avec le panneau extérieur (12) de la paroi latérale (10) qu'avec le panneau extérieur (2) du plancher (1).

2. Assemblage angulaire suivant la revendication 1, **caractérisé par le fait** que le profil de l'assemblage (7,16), faisant partie du plancher (1) fait corps avec un rebord (6) du panneau supérieur (3) du plancher (1), orienté vers le haut.

3. Assemblage angulaire suivant la revendication 1 ou 2 **caractérisé par le fait** qu'entre les panneaux extérieurs (2,12) du plancher (1) et de la paroi latérale (10) est disposé le profil d'extérieur composé de deux éléments (9,14) dont l'un (9) est assemblé à des traverses ou à un panneau ondulé du plancher, et l'autre (14), au panneau extérieur (12) de la paroi latérale (10), éléments dont des parties parallèles (9a, 14c) se recouvrent pour être soudées aux bords de la face de contact (soudure 17).

4. Assemblage angulaire suivant la revendication 3, **caractérisé par le fait** que l'élément (14) du profil d'extérieur de la paroi latérale (10) est essentiellement une cornière dont une aile (14b) est munie d'une bride (14c) pour l'assemblage avec l'autre élément (9) du profil.

5. Assemblage angulaire suivant la revendication 3 ou 4, caractérisé par le fait que l'élément de profil d'extérieur (9) du plancher (1) est un profilé chape avec des ailes verticales (9a, 9c) de longueur différente, l'aile plus longue (9a) se terminant à peu près à la face inférieure du plancher (1) et s'étendant de la longueur de l'autre aile (9c) dans l'espace entre les deux panneaux (2,3) du plancher, aile s'appuyant par une bride (9d) sur la face supérieure de traverses ou d'un panneau ondulé du plancher (1), les bords extérieurs des deux ailes étant soudés aux traverses ou au panneau ondulé.

6. Assemblage angulaire suivant la revendication 5, **caractérisé par le fait** que l'aile (9c) plus courte est inclinée vis-à-vis de l'aile (9a) plus longue de sorte que la distance entre les bouts d'aile supérieurs reliés par le dos (9e) est inférieure à la distance entre le bout de l'aile plus courte en contact avec la face supérieure des traverses ou du panneau ondulé, et l'aile plus longue.

7. Assemblage angulaire suivant la revendication 5, **caractérisé par le fait** que le panneau inférieur (2) du plancher (1) est en contact avec la bride (9d) de l'aile (9c) plus courte du profil (9), par l'intermédiaire d'une bande latérale et d'un joint, différentes traverses supportant le plancher.

8. Assemblage angulaire suivant l'une des revendications 1 à 7, **caractérisé par** une première partie (100a, 100b) du profil d'extérieur (9,14), disposée verticalement devant le côté long du plancher (1) et fixée audit plancher de sorte qu'elle est en bas au moins à peu près à fleur avec le plancher ou son bord inférieur et dépasse en haut nettement le panneau extérieur (2) du plancher et se prolonge ensuite par une deuxième partie (100, 100E) horizontale à laquelle s'ajoute, du côté opposé à celui où se trouve la première partie verticale, une troisième partie également verticale de la paroi latérale, fixée au panneau extérieur, la longueur de la deuxième partie correspondant au moins à peu près à la largeur de la paroi latérale.

9. Assemblage angulaire suivant la revendication 8, **caractérisé par le fait** que le profil d'extérieur est un profil coulé en continu ou chanfreiné en une pièce et résistant à la flexion, dont la troisième partie verticale, dépasse nettement le bord supérieur du plancher.

10. Assemblage angulaire suivant la revendication 8, **caractérisé par le fait** que le profil d'extérieur se compose de deux éléments, soit un premier élément coulé en continu ou chanfreiné (100A) fixé à la paroi latérale, et un deuxième élément (100B) en forme de fer plat ou de plaque, fixé au plancher (1), le premier élément (100A) comprenant une partie verticale (100K) fixée à la paroi latérale (10) et une partie horizontale (100E) fixée au plancher (1) et reliée au deuxième élément (100B).

11. Assemblage angulaire suivant la revendication 10, **caractérisé par le fait** que la deuxième partie (100E) horizontale du premier élément (100A) et le bout supérieur du deuxième élément se rencontrent à proximité du bord supérieur du panneau (2) du plancher (1), où ils sont assemblés ensemble.

12. Assemblage angulaire suivant la revendication 9, **caractérisé par le fait** que l'angle entre la première partie (100a) verticale et la deuxième partie (100E) horizontale est renforcé par plusieurs étais en tôle (107) répartis sur la longueur du profil d'extérieur et reliés auxdites parties.

13. Assemblage angulaire suivant la revendication 9 ou 12, **caractérisé par le fait** que la première partie (100a) verticale est repliée à son bord inférieur de sorte que le rebord ainsi réalisé se trouve au plan horizontal du bord inférieur du panneau (2) du plancher (1) qu'il ne regarde pas.

14. Assemblage angulaire suivant l'une des revendications 9 à 13, **caractérisé par le fait** qu'en cas de combinaison du profil d'extérieur avec un plancher ondulé, les profils du plancher sont disposés cote à cote suivant la longueur du plancher.

15. Procédé pour la réalisation d'un assemblage angulaire suivant au moins l'une des revendications 1 à 14 entre un plancher (1) et une paroi latérale (10), chacun des deux comportant un panneau intérieur et un panneau extérieur 3, 11 ou 2, 12, et l'espace entre ces panneaux (2, 3 ou 11, 12) du plancher respectivement de la paroi latérale (1 ou 10) étant rempli de mousse durcissante de sorte que les panneaux dépassent en direction de l'assemblage angulaire la couche respective de mousse, procédé **caractérisé par le fait** que d'abord le bourrelet (16) est placé dans le creux correspondant (7) de la jonction (7,16; 105), et le profil d'extérieur (9,10; 100), posé entre le plancher et la paroi latérale (1, 10) et assemblé aux panneaux extérieurs respectifs (2, 12), et qu'ensuite des composants de la mousse durcissante sont traités à travers les orifices (20) au niveau de la jonction (7,16; 105) de sorte qu'ils s'unissent avec les couches de mousse durcie (4,13) et les panneaux (2,3; 11,12), provoquant ainsi le durcissement de la mousse ainsi formée.
